# EUROPEAN PATENT SPECIFICATION

(11) **EP 1 198 856 B1**
(45) Date of publication and mention of the grant of the patent: **10.09.2003**
(21) Application number: 00937097.4
(22) Date of filing: 09.06.2000
(51) Int. Cl.: H01M 4/24, H01M 4/12, H01M 4/42, C22C 18/00, C22C 1/04, B22D 27/08

(54) **METHOD OF PREPARING ZINC ALLOY FOIL**
VERFAHREN ZUR HERSTELLUNG VON FOLIE AUS ZINK-LEGIERUBG
PROCEDE DE PREPARATION D'UN FEUILLARD EN ALLIAGE DE ZINC

(30) Priority: 11.06.1999 GB 9913675
(43) Date of publication of application: 24.04.2002
(73) Proprietor: Ever Ready Limited, Southgate London N14 5AQ (GB)
(72) Inventor: BATEY, Robert, Tyne & Wear NE11 9UX (GB)
(74) Representative: Fairbairn, Angus Chisholm
(86) International application number: GB0002250
(87) International publication number: WO00077868

(56) References cited:
- WO-A-98/28805
- DE-A- 1 965 636
- FR-A- 2 096 966
- US-A- 3 360 366
- US-A- 4 929 520
- US-A- 5 645 961
- LEGER M -T ET AL: "AFFINEMENT DU GRAIN DE SOLIDIFICATION PAR VIBRATION MECANIQUE APPLICATION A L'ACIER INOXYDABLE AUSTENITIQUE" FONDERIE, FONDEUR D'AUJOURD'HUI,FR,EDITIONS TECHNIQUES DES INDUSTRIES DE LA FONDERIE. PARIS, no. 162, 1 February 1997 (1997-02-01), pages 20-24,37-41, XP000690895 ISSN: 0249-3136

## Description

This invention relates to the production of zinc foil, in particular rolled foil of zinc alloyed with small amounts of additives that cause brittleness in zinc, such as bismuth, indium, calcium or combinations thereof, useful as electrode materials for alkaline electrochemical cells. More particularly, the invention relates to a method of preparing the rolled zinc alloy foil. and to rolled foil formed of these zinc alloys.

Zinc metal is commonly used as the negative electrode (anode) material in alkaline cells. Typically. zinc in the form of powder is incorporated into a cell container together with alkaline electrolyte and a gelling agent to form an anode gel. In the past, heavy metals such as mercury were included in the anode gel as additives, either as separate components or as alloy metals with the zinc, in order to perform certain functions, for example to reduce or suppress gassing in the cell. More recently, due to environmental concerns, battery manufacturers have sought to reduce or eliminate heavy metals such as mercury and lead from batteries. Consequently, attention has focused on alternative measures to fulfil the roles previously carried out by mercury. For example, small amounts of additives such as bismuth. indium. aluminium and calcium have been alloyed with the zinc powder in order to control gassing.

For certain types of battery applications, it is desirable to incorporate the negative electrode material in the cell in the form of a thin foil, for example in flat pack batteries, disc cells or spiral wound ('jelly roll') cells.

Thin rolled zinc metal foil may be produced by casting molten zinc in a mould and allowing the zinc to cool and solidify into an appropriately sized and shaped ingot, and successively passing the ingot between rollers under compression so as to reduce the thickness of the zinc at each pass, until a foil of the desired thickness has been obtained. Alternatively, cast zinc foil can be produced by casting molten zinc directly onto a suitable substrate. such as the cylindrical surface of a drum rotating about its axis in the horizontal plane. The zinc sheet thus obtained may then optionally be further rolled to produce a more even surface or to further reduce its thickness. The foil can then be bent to the desired configuration, for example by winding around a mandrel into a spiral so as to form a coiled negative electrode for a jelly roll cell.

Recently, interest has been expressed in producing batteries incorporating zinc foil that includes small amounts of additive metals alloyed with the zinc, such as bismuth, indium. calcium and aluminium. Of particular interest are zinc foil containing bismuth, indium and aluminium in combination, and zinc foil containing bismuth, indium and calcium in combination. However, until now, attempts to prepare these zinc alloys in the form of foil that is acceptable for use in batteries in practice have failed. Furthermore, it was generally not thought possible to prepare a foil of these alloys that would be of practical use for battery applications, for the reasons explained below.

Although zinc metal of battery grade purity or alloys of zinc with small amounts of lead, for example, are sufficiently workable to enable the cast metal to be reduced in thickness by rolling to form a foil in the manner described above, it was found that even small amounts of bismuth, indium or calcium as alloy metals in the zinc dramatically reduced the workability of the alloy. When a cast ingot or sheet of these alloys is rolled, hot or cold, it disintegrates due to cracking. Consequently, in practice, acceptable rolled foil of these zinc alloys could not be prepared to the desired thickness or with the desired mechanical properties by these methods.

Furthermore, to be of practical use as an electrode component in a battery, it is generally necessary that the zinc foil is capable of being bent or flexed through a small bend radius. For example, to form a spiral-wound electrode for a cylindrical 'jelly roll' cell, the foil must be capable of being wound several times around a mandrel, the initial winding around the mandrel typically being about 2 to 3 mm in diameter for a AA-sized battery. For certain flat pack batteries that use a folded electrode, the foil must be folded back onto itself, for example into a concertina-like configuration, with each fold incurring a high degree of bending. Thus, in practice, many typical electrode configurations that employ foil form electrode components require the foil to undergo a significant degree of bending or flexing to have any viable application in batteries.

However, cast foil of zinc alloyed with bismuth, indium or calcium produced by a conventional method as described above was found to crack, and often fractured completely, when attempts were made to bend the foil to any practically useful degree for battery purposes. Therefore, the known methods for forming zinc alloy foil from cast metal are inadequate for preparing practically useful foil of alloys of zinc with bismuth, indium or calcium, for use as electrode components in batteries.

US-A-3,360,366 discloses a method of reducing the grain size of cast zinc or zinc alloy, by adding yttrium to the zinc or zinc alloy melt, as a grain refining additive.

WO-A-98/28805 relates to anodes for zinc-air cells and discusses anodes formed by pressing and sintering zinc-indium alloy powder or indium-coated zinc powder into a cake. A non-particulate zinc plate anode coated with indium is disclosed.

DE-A-1965636 discusses zinc foil electrodes prepared by pressing and optionally sintering zinc powder, and zinc-foil electrodes of ductile zinc metal.

US-A-5,645,961 discloses a method of rolling cast zinc-indium alloy to a 5 mm thick sheet by hot rolling at 270°C-370°C to prevent cracking. Pellets punched from the sheet may be impact extruded to form zinc anode cans of 0.5 mm wall thickness.

FR-A-2096966 discloses a vibrator apparatus for applying vibrations to cast metal during solidification in order, for example, to help refine the metal structure.

Leger M-T, et al.: "Affinement du grain de solidification par vibration mecanique", Fonderie, Fondeur d'Aujourd'hui, no. 162, pp 20-24, 37-41 discloses applying vibrations to metal melts during solidification for preparing refined grain austenitic steels.

It would, therefore, be desirable to be able to produce foil of zinc alloyed with small amounts of bismuth, indium or calcium, individually or in combination, by a method which results in less cracking of the alloy during its working, so as to provide a more acceptable foil. It would furthermore be desirable to be able to produce foil of these zinc alloys that is less susceptible to cracking or fracturing when subjected to bending or flexing. In particular, it would be desirable to be able to produce a rolled foil of these zinc alloys that can, in practice, be incorporated into batteries as an electrode component.

We have now found, surprisingly, that it is possible to prepare a foil formed of zinc alloyed with bismuth, indium, calcium or a combination of these additive metals, by controlling the microstructure of the zinc alloy before the alloy is subjected to mechanical working in order to reduce its thickness. More specifically, what we have found is that a zinc alloy can be provided that is more workable during processing, and ultimately less susceptible to cracking or fracturing on bending, by ensuring that the alloy has a particular microstructure whereby the grains are relatively small, equiaxed and noncolumnar, and whereby secondary phases precipitated or segregated at grain boundaries and in interdendritic spaces due to the presence of the additive metals are more evenly and isotropically distributed throughout the alloy.

Accordingly, in a first aspect, the present invention provides a method of preparing a foil of an alloy of zinc with at least one additive that causes brittleness in zinc, which comprises:
casting an ingot or sheet of the alloy and subjecting the alloy to vibration during casting such that dendritic growth during solidification is interrupted, whereby dendrites are broken and act as nuclei for equiaxed grain growth, or forming a powder compact of the alloy by compressing a powder of the alloy such that the powder particles are bonded together to form a cohesive body, such that the cast or powder compact alloy has a fine, equiaxed, noncolumnar grain microstructure of an average grain size no more than about 0.2 mm and secondary phases comprising the additive metal are distributed isotropically throughout the ingot, sheet or compact, and
rolling the ingot, sheet or compact into a foil.

Preferably, the additive is selected from bismuth, indium and calcium, or combinations thereof, optionally together with aluminium.

In a second aspect, the present invention provides a foil of an alloy of zinc with at least one additive metal selected from bismuth, indium and calcium, optionally together with aluminium, the alloy having a fine, equiaxed, noncolumnar grain microstructure in which secondary phases comprising the additive metal are isotropically distributed,
obtainable by casting an ingot or sheet of the alloy and subjecting the alloy to vibration during casting such that dendritic growth during solidification is interrupted, whereby dendrites are broken and act as nuclei for equiaxed grain growth, or forming a powder compact of the alloy by compressing a powder of the alloy such that the powder particles are bonded together to form a cohesive body, such that the cast or powder compact alloy has a fine, equiaxed, noncolumnar grain microstructure of an average grain size no more than about 0.2 mm and secondary phases comprising the additive metal are distributed isotropically throughout the ingot, sheet or compact, and rolling the ingot, sheet or compact into a foil.

As mentioned above, rolled zinc metal foil can be produced by casting molten zinc in the form of an ingot and subjecting the ingot to rolling to reduce its thickness to a desired foil thickness. However, when this process is attempted with zinc alloyed with bismuth, indium or calcium or their mixed alloys, it is found that the cast ingot is too brittle to be rolled, resulting in cracking. Furthermore, bending of the foil is likely to cause further cracking and fracturing.

Alternatively, zinc metal foil can be produced by casting molten zinc directly onto a suitable surface, such that the zinc spreads over the surface and solidifies to a thickness of typically 0.15 mm or more. The cast foil thus obtained has a relatively uneven surface. In practice, the cast foil is used in this condition without further working to smooth the surface but, if desired, could be calendered or rolled to even the surface or to further thin the foil. The cast zinc metal foil may be bent. However, with zinc alloyed with bismuth, indium or calcium or their mixed alloys, the cast foil is too brittle to be bent to a tight radius and attempts to bend the foil result in cracking or fracturing. The cast zinc alloy foil may also be too brittle to be evened or thinned by calendering or rolling, resulting in cracking.

This phenomenon may be explained in terms of the microstructure of cast zinc. When molten zinc cools and solidifies. large columnar grains crystallise in the direction of heat extraction towards the surface of the zinc. Thus. in cast zinc foil, columnar grains of zinc are oriented across the thickness of the foil. perpendicular to the surface on which the zinc is cast. Similarly, in zinc ingots formed by casting molten zinc in a mould, large columnar grains are crystallised perpendicular to the surfaces contacting the mould. Because of the relatively large grain size. there is an associated low grain boundary surface area.

During the solidification of ingots of zinc alloy compositions with Bi. In and Ca, precipitates of Bi. In and Ca in planes within the grains and at grain boundaries cause brittleness. These planes are directional, being parallel to the direction of heat extraction and therefore perpendicular to the top and bottom faces of the ingot. Increasing the concentration of Bi or In exacerbates this condition because of the formation of a low melting point eutectic phase.

Thus, secondary phases of these metals and their intermetallic compounds are concentrated at grain boundaries and in interdendritic spaces in the solid cast product. The low grain boundary surface area associated with the columnar microstructure of cast zinc increases the concentration of secondary phases at the grain boundaries. These concentrated secondary phases, aligned in planes of weakness perpendicular to the top and bottom faces of the ingot, represent areas of brittleness or weakness which ultimately can lead to cracking when the zinc alloy is subsequently mechanically worked, for example by rolling.

Furthermore, eutectic secondary phases due to the presence of the alloy metals in zinc decrease the lower limit of the "hot shortness" temperature range (defined as the hot forming temperature range in which the metal exhibits brittleness), so that the maximum temperature below which the metal can safely be worked without cracking is reduced. For example, for zinc alloys of lead (Pb), the presence of 0.08 % Pb results in a hot shortness temperature range of 300 to 419 °C. whereas 0.3 % Pb produces a hot shortness range of 275 to 419 °C. In cast zinc alloys with bismuth. indium or calcium. the hot shortness temperature range is such that working of the metal cannot be effected safely either at hot or cold temperatures (*e.g*. below 100 °C).

We have found that it is possible to safely work zinc alloyed with bismuth, indium or calcium by ensuring that the secondary phase precipitations due to the presence of the alloy metals are more randomly oriented and more uniformly distributed within the solid metal body before the metal body is subjected to mechanical working.

This has been achieved by providing a metal body in which the grain microstructure is relatively fine. equiaxed and noncolumnar. as compared with the large sized, columnar grain microstructure typically obtained in cast zinc metal.

By ensuring a finer grain structure, and consequently a larger average grain surface area, the precipitations of secondary phases along grain boundaries are more homogeneously distributed within the bulk metal body that is to be subjected to working. Furthermore, by providing a more randomly oriented segregation or precipitation of the secondary phases, planes of weakness which can cause brittleness are reduced. Consequently, a less brittle and more workable metal body is obtained that can be formed into a thin foil without unacceptable degrees of cracking.

Thus, the method of the present invention provides a benefit in refining of the grain size to increase the grain boundary surface area, thereby reducing the concentration of these secondary phases at grain boundaries. The method further provides a second, associated benefit in reorienting the planes of the secondary phase precipitates isotropically.

According to a first embodiment, the requisite structure is provided in a cast zinc alloy ingot by vibrating the cast molten metal in the mould during solidification such that dendrites growing in the solidifying metal are broken. By disrupting the growth of these dendrites, the broken dendrites can act as nuclei for further dendrite growth and, at the same time, for crystallisation of grains. Consequently, the metal crystallises to a finer, more equiaxed. and noncolumnar grain microstructure as compared to a conventionally cast ingot. Moreover, the segregation of secondary phases at grain boundaries and in interdendritic spaces is more uniformly distributed and more randomly oriented throughout the body of the cast ingot.

In an alternative first embodiment, instead of casting the zinc alloy in the form of an ingot, a zinc alloy sheet is cast directly from molten zinc alloy onto a flat mould surface, and the surface and cast metal are vibrated during solidification of the metal such that dendrite growth is interrupted by the vibrations. The sheet may then, if necessary, be subjected to calendering or rolling in order to reduce its thickness to the desired foil thickness.

The zinc alloy is melted and cast, typically at a casting temperature of 500 °C, in a mould that is preferably preheated to 200-350 °C, for example 250-300 °C. Vibrations may be applied by vibrating the mould, preferably vertically, at an amplitude. frequency and for a duration chosen such that dendrites are broken in the alloy as the alloy solidifies, the vibrations being initiated immediately prior to dispensing the molten alloy into the mould in order to ensure immediate disruption of dendrites when the zinc alloy is first cast. Any appropriate means can be used in order to apply the vibrations. for example mechanical or ultrasonic means.

Suitably, vibrations of an amplitude of 0.2-0.4 mm and frequency of 50 Hz are applied for a duration of about 10 seconds, dependant on ingot size. It will be appreciated that other appropriate combinations of amplitudes, frequencies and durations may be applied provided that the vibrations are effective to disrupt dendritic growth during solidification of the alloy. However, we prefer that the vibration amplitude should not exceed 0.4 mm, as greater amplitudes tend to produce discontinuities in the cast ingot or sheet. Similarly, we prefer that the vibration frequency should not exceed 300 Hz to reduce the likelihood of discontinuities occurring. A suitable vibration frequency is 50 Hz, as this frequency allows satisfactory grain refinement and secondary phase dispersal to be achieved without discontinuities, and is convenient being the mains frequency. We also prefer that the vibration duration is such that the vibrations stop before the ingot solidifies completely, in order to reduce the likelihood of discontinuities being formed. Suitably, the vibration duration is selected as half the time taken for complete solidification without vibration.

In a second embodiment, the bulk metal body to be subjected to mechanical working in order to produce a foil, is a compact of a powder of the zinc alloy. The compact may be produced by compressing powdered zinc alloy such that the zinc alloy particles form a cohesive body that can subsequently be subjected to mechanical working to form a foil. The pressure used to form the compact will preferably be sufficient that the zinc alloy particles bond together at contacts point or boundaries between adjacent particles, so as to undergo solid phase bonding. Usually, it will be unnecessary to subject the compact to heat treatment during its preparation. However, if desired, the compact may be sintered before it is subjected to mechanical working. In this case, preferred sintering temperatures are from 140 to 200 °C, for example about 150 °C, at pressures of from 100 to 200 N/mm².

In this second embodiment. the grain size of the zinc alloy in the compact is determined primarily by the particle size of the powder used to prepare the compact. Preferably, powder of an average particle size in the range from 100 to 500 µm is used, more preferably from 150 to 250 µm, and most preferably from 180 to 200 µm.
Suitably, the powder has a particle size distribution as follows (percentages by weight):

| | |
|---|---|
| 0-75 µm | 2-20%. preferably 5-10% |
| 75-150 µm | 20-60%. preferably 25-50% |
| 150-250 µm | 25-55%, preferably 30-45% |
| 250-500 µm | 5-35%, preferably 10-30%. |

For example, a suitable BiInCa zinc alloy powder has the particle size distribution:

| | |
|---|---|
| 0-75 µm | 7.5% |
| 75-150 µm | 27.5% |
| 150-250 µm | 40.0% |
| 250-500 µm | 25.0% |

A suitable BiInAl zinc alloy powder has, for example, the particle size distribution:

| | |
|---|---|
| 0-75 µm | 7.5% |
| 75-150 µm | 45.5% |
| 150-250 µm | 35.0% |
| 250-500 µm | 12.0% |

Because the powder particles will be randomly oriented in the compact, and in any case the grains within each particle will be present in all orientations, the grain orientation throughout the compact is isotropic. Consequently, secondary phases due to alloy metals precipitated at grain boundaries in the powder particles will also be segregated isotropically in the bulk of the compact. Furthermore, by using small sized zinc alloy powder particles in the compact, the grain microstructure is fine, equiaxed and noncolumnar in the compact. Thus, any secondary phase precipitations at grain boundaries will be uniformly distributed in the body of the compact.

Therefore, it will be appreciated that in accordance with the present invention the zinc alloy body that is used to form the zinc alloy foil has a grain microstructure that is fine, equiaxed and noncolumnar, as compared the zinc alloy when cast by a conventional method.

As used herein, by "isotropically distributed" is meant that the distribution of secondary phases in the zinc alloy body is more uniform and the orientation of the secondary phases more random as compared with the distribution and orientation of secondary phases in zinc alloy bodies of the same composition that are formed primarily of columnar grains.

We prefer that the zinc alloy body prior to mechanical working is provided with a grain microstructure of an average grain size no more than about 0.2 mm, preferably less than 150 µm, generally in the range from 1 to 100 µm, more preferably from 3 to 50 µm, more preferably still from 5 to 20 µm, and most preferably about 10 µm. By "grain size" as used herein is meant the average length of the longest dimension of the grains. After rolling, foils may be achieved that have an average grain size as low as 1.5 µm.

Having prepared a zinc alloy body that has the specified microstructure, as an ingot or compact as described above, the body is then subjected to mechanical working in order to form a foil of the desired thickness. If the body was formed with substantially equal width and height dimensions, it will usually be preferable to form the body into a more flattened shape to facilitate further thickness reduction by rolling apparatus. Such initial flattening can for example be effected by unidirectional compression, preferably under warm compression under temperatures at which recrystallisation of the grains can occur. In order to reduce the likelihood of cracking at the edge of the body due to tensile stresses at the peripheral region, such initial flattening is preferably carried out in stages of less than 15 %, more preferably about 10 %, thickness reduction, and the body is maintained at the recrystallisation temperature for a period of time between compression stages to allow recrystallisation of fine grains.

The body is subjected to rolling to produce a foil of the desired thickness. Conventional rolling methods and apparatus known in the art for the production of metal foil may be used. The rolling conditions may be varied in accordance with conventional practice, provided that care is taken not to exceed the hot shortness temperature of the zinc alloy being rolled. In a preferred rolling method, the flattened zinc alloy ingot or compact is warm rolled, preferably at a temperature of from 80 to 100 °C, under a compressive rolling pressure to undergo a thickness reduction of preferably from 10 to 20 % in a first rolling pass. Following the first rolling pass, the alloy sheet is maintained preferably at a temperature of from 80 to 100 °C to allow grains to recrystallise. The procedure of rolling and recrystallisation may be repeated as often as required, until the desired thickness of foil has been reached.

The desired thickness of foil will be determined by the end use of the foil. For most battery applications, it is preferred to produce a foil of a thickness of no more than 0.5 mm, preferably in the range from 20 to 250 µm, preferably in the range from 50 to 200 µm, more preferably from 80 to 125 µm, and in particular about 100 µm.

The method according to the present invention allows foil of a thickness below 150 µm to be prepared that is free from cracking, except perhaps for slight cracking at the edges of the foil. Foil having a thickness as small as 20 µm is achievable in accordance with the present invention. Furthermore, it is possible to prepare foil in accordance with the present invention that can be bent without cracking or fracturing. Foil is achievable that does not crack or fracture when bent through bend radii of I mm, or, for example 0.5 mm, preferably 0.3 mm, and even 0.1 mm.

It will be appreciated that the practical conditions used in the method of the present invention may be varied so as to produce zinc alloy foil having the desired thickness and bending tolerance according to the end use contemplated for the foil.

As used herein, the term "additive" refers to any metal or compound included or present in the zinc in an amount such that it is effective for the cell or other application for the foil, for example a metal such as bismuth, indium, calcium, aluminium or magnesium. The zinc alloy in accordance with the present invention comprises at least one additive metal selected from bismuth, indium and calcium. Optionally, the zinc alloy further comprises aluminium. Preferably, the zinc alloy is an alloy of zinc with bismuth, indium and aluminium, or an alloy of zinc with bismuth, indium and calcium. Most preferably, the zinc alloy is an alloy of zinc with bismuth, indium and aluminium. It will be appreciated, however, that the method according to the present invention is also applicable to alloys of zinc with other additive metals, for example magnesium, where such other additive metals would cause brittleness in conventionally cast zinc.

The zinc alloy used in accordance with the present invention may further comprise small amounts of impurities such as Hg, Pb, Fe, Cd, Cu, Ni, Cr, Sn, V, Al, As, Sb, Mo, Ge and ZnO, to the extent that these are not incompatible with the method of the present invention. However, preferably, the zinc alloy is free of mercury. Also, we prefer that the zinc alloy is free of lead. By "free of (metal M)" is meant that the zinc alloy contains no added metal M. it being understood that trace impurities could be present.

Preferably, the zinc alloy comprises less than 500 ppm of each additive metal, preferably from 50 to 500 ppm. more preferably from 80 to 300 ppm, and in particular from about 100 to about 250 ppm. of each additive metal. The total amount of the additive metals preferably should not exceed 1500 ppm. more preferably 1000 ppm, especially 700 ppm, and in particular 500 ppm.

In a preferred embodiment, the alloy consists of Bi (10-500 ppm). In (10-500 ppm), Al (10-500 ppm), balance Zn and trace impurities, more preferably Bi (50-250 ppm), In (100-300 ppm), Al (50-250 ppm), balance Zn and trace impurities, and most preferably Bi (75-150 ppm), In (150-250 ppm). Al (75-150 ppm). balance Zn and trace impurities.

In another preferred embodiment, the alloy consists of Bi (10-500 ppm), In (10-500 ppm), Ca (10-500 ppm), balance Zn and trace impurities, more preferably Bi (150-350 ppm), In (150-350 ppm), Ca (75-250 ppm), balance Zn and trace impurities, and most preferably Bi (200-300 ppm), In (200-300 ppm), Ca (125-200 ppm), balance Zn and trace impurities.

The present invention may be further illustrated by reference to the following nonlimiting examples:

### EXAMPLES:

### Example 1:

Foils were produced from powder compacts of Zn alloyed with Bi. In and Ca (Bi=250 ppm; In=250 ppm; Ca=150 ppm) and Zn alloyed with Bi. In and Al (Bi=100 ppm; In=200 ppm; Al=100 ppm). The BiInCa zinc alloy powder used had a particle size distribution: 0-75 µm - 7.5% ; 75-150 µm - 27.5% ; 150-250 µm - 40.0 % ; 250-500 µm - 25.0%. The BiInAl zinc alloy powder used had a particle size distribution: 0-75 µm - 7.5% ; 75-150 µm - 45.5% ; 150-250 µm - 35.0% ; 250-500 µm - 12.0%:

5 g of Zn alloy powder was cold compacted at a pressure of 115 Nmm⁻², to form a cylindrical compact body approximately 13 mm in diameter and 5 mm in thickness. The compact, unsintered, was warm compressed at 80-100 °C to form a disc of approximately 1.5 mm thickness. The disc was progressively rolled in stages of 10-20 % reduction in thickness, with intermediate heat recrystallisation treatments at 80-100 °C for 5 min, to form a foil of a thickness of 100 µm.

The foils of BiInCa zinc alloy and BiInAl zinc alloy obtained were free from cracks, except for slight cracking at the edges. Both foils could be bent at least to a bend radius of 1 mm without cracking or fracturing.

### Example 2:

Foils were produced from cast ingots of Zn alloyed with Bi, In and Ca (Bi=250 ppm; In=250 ppm; Ca=150 ppm) and Zn alloyed with Bi. In and Al (Bi=100 ppm; In=200 ppm; Al=100 ppm), as follows:

Zn alloy was melted and cast at a casting temperature of 500 °C in a mould preheated to 350 °C. The mould was mechanically vibrated at an amplitude of 0.4 mm and frequency of 50 Hz for a duration of 10 seconds. The vibrations were initiated immediately prior to dispensing the molten Zn alloy into the mould to ensure the immediate disruption of dendrites when the zinc alloy was first cast. The Zn alloy solidified to an ingot approximately 30 mm width x 50 mm length x 6 mm thickness.

The ingots were found to have an equiaxed grain microstructure. with an average grain size of approximately 0.2 mm. Secondary phases were isotropically distributed at grain boundaries.

The ingots were progressively rolled in stages of 10-20 % reduction in thickness. with intermediate heat recrystallisation treatments at 80-100 °C for 5 min. to form foil of a a thickness of 120 µm. Foil as thin as 20 µm was formed by folding over the 120 µm thick foil to form a quadruple layered foil. rolling to the layered foil to 80 µm thickness and unfurling it to a single layer foil of 20 µm thickness.

The foils of BiInCa zinc alloy and BiInAl zinc alloy obtained were free from cracks, except for slight cracking at the edges. Both foils could be bent at least to a bend radius of 1 mm without cracking or fracturing. Indeed. the foils did not crack even when subjected to a 180 degree (sharp crease) bend test.

### Example 3 (comparative):

Cast ingots were produced. of Zn alloyed with Bi, In and Ca (Bi=250 ppm: In=250 ppm; Ca=150 ppm) and Zn alloyed with Bi, In and Al (Bi=100 ppm; In=200 ppm; Al=100 ppm), as follows:

Zn alloy was melted and cast at a casting temperature of 500 °C in a mould preheated to 20 °C. without vibration, and allowed to cool to a solid. The Zn alloy solidified to an ingot approximately 30 mm width x 50 mm length x 6 mm thickness.

The ingots were found to have a columnar grain microstructure, with grain sizes of approximately 3 mm. Secondary phases were observed in parallel planes within grains at interdendritic boundaries. The microstructure was unsatisfactory for subsequent rolling.

## Claims

1. A method of preparing a foil of an alloy of zinc with at least one additive that causes brittleness in zinc, which comprises:
casting an ingot or sheet of the alloy and subjecting the alloy to vibration during casting such that dendritic growth during solidification is interrupted whereby dendrites are broken and act as nuclei for equiaxed grain growth, or forming a powder compact of the alloy by compressing a powder of the alloy such that the powder particles are bonded together to form a cohesive body, whereby the cast or powder compact alloy has a fine, equiaxed, noncolumnar grain microstructure in which secondary phases comprising the additive metal are distributed isotropically throughout the ingot, sheet or compact, and
rolling the ingot, sheet or compact into a foil.

2. A method according to claim 1, wherein the additive is a metal selected from bismuth, indium and calcium, optionally together with aluminium.

3. A method according to any preceding claim, wherein the fine grain microstructure is of an average grain size in the range from 5 to 20 µm.

4. A method according to any preceding claim, wherein the zinc alloy is of bismuth, indium and aluminium.

5. A method according to any preceding claim, wherein the zinc alloy comprises from 50 to 500 ppm of additive metal.

6. A method according to any preceding claim, wherein the zinc alloy is free of mercury.

7. A method according to any preceding claim, wherein the zinc alloy is free of lead.

8. A method according to any preceding claim, wherein the alloy is rolled to a foil thickness of from 20 to 250 µm.

9. A method according to any preceding claim, further comprising bending the foil through a bend radius of 0.1 to 1 mm.

10. A foil of an alloy of zinc with at least one additive metal selected from bismuth, indium and calcium, optionally together with aluminium, the alloy having a fine, equiaxed, noncolumnar grain microstructure in which secondary phases comprising the additive metal are isotropically distributed,
obtainable by casting an ingot or sheet of the alloy and subjecting the alloy to vibration during casting such that dendritic growth during solidification is interrupted whereby dendrites are broken and act as nuclei for equiaxed grain growth, or forming a powder compact of the alloy by compressing a powder of the alloy such that the powder particles are bonded together to form a cohesive body, such that the cast or powder compact alloy has a fine, equiaxed, noncolumnar grain microstructure in which secondary phases comprising the additive metal are distributed isotropically throughout the ingot, sheet or compact, and rolling the ingot, sheet or compact into a foil.

11. A foil according to claim 10, wherein the foil has a fine grain microstructure of an average grain size in the range from 1.5 to 20 µm.

12. A foil according to claim 10 or claim 11, wherein the foil has a thickness of from 20 to 250 µm.

13. A foil according to any of claims 10 to 12, wherein the foil is bent through a bend radius of 0.1 to 1 mm.

14. An electrochemical cell comprising an electrode formed of a foil according to any of claims 10 to 13.

## Patentansprüche

1. Verfahren zur Herstellung einer Folie aus einer Legierung von Zink mi mindestens einem Zusatzstoff, der Sprödigkeit in Zink hervorruft, wobei das Verfahren aufweist:
Gießen eines Blocks oder einer Tafel aus der Legierung und Einwirkenlassen einer Vibration auf die Legierung während des Gießens, so daß das dendritische Wachstum während der Erstarrung unterbrochen wird, wodurch Dendriten unterbrochen werden und als Keime für ein gleichachsiges Kornwachstum wirken, oder Formen eines Pulverpreßlings aus der Legierung durch Pressen eines Pulvers aus der Legierung, so daß die Pulverteilchen miteinander zu einem zusammenhängenden Körper verbunden werden wodurch die gegossene oder aus Pulver gepreßte Legierung eine feinkörnige gleichachsige, nicht säulenförmige Kornmikrostruktur aufweist, in der Sekundärphasen die das Zusatzmetall aufweisen, isotrop im gesamten Block, der gesamten Tafel oder im gesamten Preßling verteilt sind, und
Walzen des Blocks, der Tafel oder des Preßlings zu einer Folie.

2. Verfahren nach Anspruch 1, wobei der Zusatzstoff ein Metall ist, das unter Bismut, Indium und Calcium ausgewählt ist, wahlweise zusammen mit Aluminium.

3. Verfahren nach einem der vorstehenden Ansprüche, wobei die feinkörnige Mikrostruktur eine mittlere Korngröße im Bereich von 5 bis 20 µm aufweist.

4. Verfahren nach einem der vorstehenden Ansprüche, wobei die Zinklegierung Bismut, Indium und Aluminium aufweist.

5. Verfahren nach einem der vorstehenden Ansprüche, wobei die Zinklegierung 50 bis 500 ppm Zusatzmetall aufweist.

6. Verfahren nach einem der vorstehenden Ansprüche, wobei die Zinklegierung quecksilberfrei ist.

7. Verfahren nach einem der vorstehenden Ansprüche, wobei die Zinklegierung bleifrei ist.

8. Verfahren nach einem der vorstehenden Ansprüche, wobei die Legierung auf eine Foliendicke von 20 bis 250 µm gewalzt wird.

9. Verfahren nach einem der vorstehenden Ansprüche, das ferner das Biegen der Folie mit einem Biegeradius von 0,1 bis 1 mm aufweist.

10. Folie aus einer Legierung von Zink mit mindestens einem Zusatzmetall, das unter Bismut, Indium und Calcium ausgewählt ist, wahlweise zusammen mit Aluminium, wobei die Legierung eine feinkörnige, gleichachsige, nicht säulenförmige Kornmikrostruktur aufweist, in der Sekundärphasen, die das Zusatzmetall aufweisen, isotrop verteilt sind,
herstellbar durch Gießen eines Blocks oder einer Tafel aus der Legierung und Einwirkenlassen einer Vibration auf die Legierung während des Gießens, so daß das dendritische Wachstum während der Erstarrung unterbrochen wird, wodurch Dendriten unterbrochen werden und als Keime für ein gleichachsiges Kornwachstum wirken, oder Formen eines Pulverpreßlings aus der Legierung durch Pressen eines Pulvers aus der Legierung, so daß die Pulverteilchen miteinander zu einem zusammenhängenden Körper verbunden werden, so daß die gegossene oder aus Pulver gepreßte Legierung eine feinkörnige, gleichachsige, nicht säulenförmige Kornmikrostruktur aufweist, in der Sekundärphasen, die das Zusatzmetall aufweisen, isotrop im gesamten Block, der gesamten Tafel oder im gesamten Preßling verteilt sind, und Walzen des Blocks, der Tafel oder des Preßlings zu einer Folie.

11. Folie nach Anspruch 10, wobei die Folie eine feinkörnige Mikrostruktur mit einer mittleren Korngröße im Bereich von 1,5 bis 20 µm aufweist.

12. Folie nach Anspruch 10 oder 11, wobei die Folie eine Dicke von 20 bis 250 µm aufweist.

13. Folie nach einem der Ansprüche 10 bis 12, wobei die Folie mit einem Biegeradius von 0,1 bis 1 mm gebogen wird.

14. Elektrochemische Zelle mit einer Elektrode, die aus einer Folie nach einem der Ansprüche 10 bis 13 geformt ist.

## Revendications

1. Un procédé de préparation d'un feuillard d'un alliage de zinc avec au moins un additif qui cause la fragilité du zinc, qui consiste à:
couler un lingot ou une feuille de l'alliage et soumettre l'alliage à vibration durant la coulée de sorte que la croissance dendritique durant la solidification soit interrompue de manière à ce que les dendrites soient cassées et agissent comme des noyaux pour une croissance de grain équiaxe, ou former un comprimé de poudre de l'alliage en comprimant une poudre de l'alliage de sorte que les particules de poudre soient liées ensemble pour former un corps cohésif, de sorte que la coulée ou l'alliage comprimé de poudre possède une microstructure de grain fine, équiaxe, sans colonnes dans laquelle les phases secondaires comprenant l'additif métallique sont distribuées de manière isotrope à travers le lingot, la feuille ou le comprimé, et
laminer le lingot, la feuille ou le comprimé en un feuillard.

2. Un procédé selon la revendication 1, dans lequel l'additif est un métal sélectionné parmi le bismuth, l'indium et le calcium, optionnellement conjointement avec l'aluminium.

3. Un procédé selon une quelconque revendication précédente, dans lequel la microstructure de grain fine est d'une dimension moyenne de grain dans le domaine de 5 à 20 µm.

4. Un procédé selon une quelconque revendication précédente, dans lequel l'alliage de zinc est constitué de bismuth, d'indium et d'aluminium.

5. Un procédé selon une quelconque revendication précédente, dans lequel l'alliage de zinc comprend de 50 à 500 ppm d'additif métallique.

6. Un procédé selon une quelconque revendication précédente, dans lequel l'alliage de zinc est exempt de mercure.

7. Un procédé selon une quelconque revendication précédente, dans lequel l'alliage de zinc est exempt de plomb.

8. Un procédé selon une quelconque revendication précédente, dans lequel l'alliage est laminé en un feuillard d'épaisseur allant de 20 à 250 µm.

9. Un procédé selon une quelconque revendication précédente, comprenant en outre le pliage du feuillard selon un rayon de pliure de 0,1 à 1mm.

10. Un feuillard d'un alliage de zinc avec au moins un additif métallique sélectionné parmi le bismuth, l'indium et le calcium, optionnellement conjointement avec l'aluminium, l'alliage possédant une microstructure de grain fine, équiaxe, sans colonnes dans laquelle les phases secondaires comprenant l'additif métallique sont distribuées de manière isotrope,
pouvant être obtenu en coulant un lingot ou une feuille de l'alliage et en soumettant l'alliage à vibration durant la coulée de sorte que la croissance dendritique durant la solidification soit interrompue de manière à ce que les dendrites soient cassées et agissent comme des noyaux pour une croissance de grain équiaxe, ou en formant un comprimé de poudre de l'alliage en comprimant une poudre de l'alliage de sorte que les particules de poudre soient liées ensemble pour former un corps cohésif, de sorte que la coulée ou l'alliage comprimé de poudre possède une microstructure de grain fine, équiaxe, sans colonnes dans laquelle les phases secondaires comprenant le métal additif sont distribuées de manière isotrope à travers le lingot, la feuille ou le comprimé, et en laminant le lingot, la feuille, ou le comprimé en un feuillard.

11. Un feuillard selon la revendication 10, dans lequel le feuillard possède une microstructure de grain fine de dimension moyenne de grain dans le domaine de 1,5 à 20 µm.

12. Un feuillard selon la revendication 10 ou la revendication 11, dans lequel le feuillard possède une épaisseur allant de 20 à 250 µm.

13. Un feuillard selon une quelconque des revendications 10 à 12, dans lequel le feuillard est plié selon un rayon de pliure de 0,1 à 1 mm.

14. Une cellule électrochimique comprenant une électrode formée d'un feuillard selon une quelconque des revendications 10 à 13.
